# EUROPÄISCHE PATENTSCHRIFT

(11) **EP 0 715 473 B1**
(45) Veröffentlichungstag und Bekanntmachung des Hinweises auf die Patenterteilung: **14.08.2002**
(21) Anmeldenummer: 95117593.4
(22) Anmeldetag: 08.11.1995
(51) Int. Cl.: H04Q 3/00, H04M 3/42, H04Q 7/38

(54) **Verfahren zur Nutzung von Diensten durch Netzteilnehmer eines Kommunikationsnetzes**
Method for using services by a telecommunications network subscriber
Procédé d'utilisation des services par un abonné d'un réseau de télécommunications

(30) Priorität: 28.11.1994 DE 4442305
(43) Veröffentlichungstag der Anmeldung: 05.06.1996
(73) Patentinhaber: SIEMENS AKTIENGESELLSCHAFT, 80333 München (DE)
(72) Erfinder: Eder, Jürgen, Dipl.-Ing., D-81249 München (DE); Becker, Helmut, Dipl.-Ing., D-83043 Bad Aibling (DE)

(56) Entgegenhaltungen:
- WO-A-93/18606
- WO-A-96/13949
- WYATT G Y ET AL: "THE EVOLUTION OF GLOBAL INTELLIGENT NETWORK ARCHITECTURE" AT & T TECHNICAL JOURNAL, Bd. 70, Nr. 3 / 4, 1. Juni 1991 (1991-06-01), Seite 11-25 XP000271085 Short Hills, NJ, US ISSN: 8756-2324
- SÖDERBERG L: "EVOLVING AN INTELLIGENT ARCHITECTURE FOR PERSONAL TELECOMMUNICATION" ERICSSON REVIEW,SE,ERICSSON. STOCKHOLM, Bd. 70, Nr. 4, 1. Januar 1993 (1993-01-01), Seite 156-171 XP000415352 Stockholm, SE ISSN: 0014-0171

## Beschreibung

Die Erfindung betrifft ein Verfahren zur Nutzung von Diensten durch Netzteilnehmer eines Kommunikationsnetzes mit mindestens einer in einer Vermittlungseinrichtung verwirklichten Dienstevermittlungseinheit und mindestens einer in einer Teilnehmerdatenbasis verwirklichten Dienstesteuerungseinheit zur jeweiligen Unterstützung der Netzstruktur eines intelligenten Netzes gemäß dem Oberbegriff des Patentanspruchs 1.

Bekanntlich weisen Kommunikationsnetze - ob Festnetze wie beispielsweise das öffentliche Fernsprechnetz oder Mobilfunknetze wie beispielsweise das für Europa standardisierte GSM-Netz (Global System for Mobile Communication) - Netzteilnehmer auf, die durch zugehörige Teilnehmerstationen - beispielsweise leitungsgebundene oder mobile Fernsprechgeräte - abgehende Anrufe aussenden und ankommende Anrufe empfangen können. Zum Verbindungsaufbau zwischen einem anrufenden Netzteilnehmer und einem angerufenen Netzteilnehmer innerhalb eines Kommunikationsnetzes oder zwischen verschiedenen Kommunikationsnetzen, sind in jedem Kommunikationsnetz mindestens eine Vermittlungseinrichtung zur Durchschaltung der jeweiligen Anrufe und mindestens eine Teilnehmerdatenbasis zur Speicherung der Teilnehmerdaten der an das jeweilige Kommunikationsnetz angeschlossenen Netzteilnehmer vorgesehen. Als Beispiel für ein Kommunikationsnetz dient das aus der Systembeschreibung "D900-Mobile Communication System", System Description SYD, 1992 (Bestellnummer A30808-X3231-X-2-7618) bekannte Mobilfunknetz nach dem GSM-Standard mit einer oder mehreren Mobilvermittlungsstellen und Heimat- bzw. Besucherregister als Teilnehmerdatenbasen zur Speicherung der Daten der das Mobilfunknetz und die darin bereitgestellten Dienste nutzenden Mobilfunkteilnehmer.

Das daraus bekannte digitale, Mobilfunknetz unterstützt dabei die Netzstruktur eines intelligenten Netzes, das durch dezentrale, über das gesamte Netz verteilte Intelligenz in den einzelnen Netzeinrichtungen gekennzeichnet ist, was der Systembeschreibung "D900.." in Kapitel 2.3 auf Seite 11 entnehmbar ist. Das Mobilfunknetz mit der Netzstruktur eines intelligenten Netzes verfügt über Dienstevermittlungseinheiten (Service Switching Points) und Dienstesteuerungseinheiten (Service Control Points), von denen die Dienstevermittlungseinheiten in den Vermittlungseinrichtungen des Mobilfunknetzes und die Dienstesteuerungseinheiten in den Datenregistern des Vermittlungssubsystems des Mobilfunknetzes verwirklicht sind.

Ein intelligentes Netz als solches verfügt über Dienstesteuerungseinheiten zur Bereitstellung von speziellen Diensten für die Netzteilnehmer des intelligenten Netzes. Nach der CCITT-Empfehlung Q.1200, beispielsweise Ausgabe März 1992, werden die in einem intelligenten Netz nutzbaren Dienste in einer Dienstevermittlungseinheit angestoßen, um einen Ausstieg aus der üblichen Anrufverarbeitung (Call Processing) zu bewirken und damit einen Zugriff zu neuen. Diensten zu aktivieren. Die Einführung von neuen Diensten in einem bestehenden Kommunikationsnetz, wie zum Beispiel dem Mobilfunknetz, wird zwar durch die Unterstützung der Netzstruktur eines intelligenten Netzes prinzipiell ermöglicht, jedoch nur aktiv durch Eingabe von jeweils für derartige Dienste festgelegten Rufnummern durch den jeweiligen Netzteilnehmer in seine zugehörige Teilnehmerstation ausgelöst.

Die ältere Anmeldung WO-A-9613949, veröffertlicht 09.05.1996 offenbart ein Mobilfunknetz, in welchem intelligente Dienste aufgrund einer in einem HLR gespeicherten teilnehmerindividuellen Kennung gestartet werden.

Die WO-A-93/18606 offenbart die Behandlung eines eingehenden calls unter Berücksichtigung einer ANI durch eine intelligente ISCP, wobei die ANI als automatic number identification data die Zielrufnummer des calls beinhaltet.

Aufgabe der vorliegenden Erfindung ist es, ein Kommunikationsnetz der eingangs genannten Art derart auszugestalten, daß ein erweitertes Dienstespektrum für die Netzteilnehmer des Kommunikationsnetzes unabhängig von der gewählten Teilnehmerrufnummer des Angerufenen sowohl bei abgehenden als auch bei ankommenden Anrufen flexibel und unmerklich für den Dienstenutzer genutzt werden kann unter Reduzierung des dafür erforderlichen Signalisierungsanfwander.

Diese Aufgabe wird durch die Merkmale des Patentanspruchs 1 gelöst. Weiterbildungen der Erfindung sind in Unteransprüchen angegeben.

Demnach wird im Kommunikationsnetz durch Einrichten mindestens einer Dienstekennung als teilnehmerindividuelles Teilnehmerdatum in der jeweiligen Teilnehmerdatenbasis und durch Auswerten dieser Dienstekennung während der Anrufbehandlung bei jedem ankommenden oder abgehenden Anruf eine Verzweigung zu einer in einer Teilnehmerdatenbasis des intelligenten Netzes verwirklichten Dienstesteuerungseinheit ausgelöst. Von dieser Dienstesteuerungseinheit werden Informationen zur Nutzung von jeweils im intelligenten Netz zusätzlich angebotenen Diensten an die Vermittlungseinrichtung des Kommunikationsnetzes und damit der darin verwirklichten Dienstesteuerungseinheit abgegeben.

Die teilnehmerindividuelle Dienstekennung bewirkt die erweiterte Nutzung von Diensten während der üblichen vermittlungs- und steuerungstechnischen Abläufe bei der Anrufbehandlung im Kommunikationsnetz intern, d.h. unmerklich für den als Dienstenutzer auftretenden Netzteilnehmer. Die dadurch im intelligenten Netz zusätzlich nutzbaren Dienste können individuell für jeden Netzteilnehmer des Kommunikationsnetzes eingerichtet und während der üblichen Anrufbehandlung durch die netzintern in mindestens einer Teilnehmerdatenbasis eingetragene Dienstekennung ohne Inanspruchnahme einer eigenen Rufnummer für den jeweiligen Dienst ausgelöst werden. Die Erweiterung des Dienstespektrums beispielsweise im Mobilfunknetz besteht darin daß die jedem Mobilfunkteilnehmer zur Verfügung stehenden Basis- und Zusatzdienste (Supplementary Services) durch die flexibel konfigurierbaren und von einer Dienstesteuerungseinheit gesteuerten spezifischen Dienste im intelligenten Netz auf Wunsch ergänzt werden. Dies bedeutet eine Verknüpfung der Dienste im Kommunikationsnetz mit den Diensten im intelligenten Netz.

Bei dem Verfahren gemäß der Erfindung können netzspezifische Daten des intelligenten Netzes, die üblicherweise in einer Dienstesteuerungseinheit des intelligenten Netzes vorhanden sind, mit den Daten anderer Netze netzintern verknüpft werden, ohne daß der die zusätzlichen Dienste in Anspruch nehmende Netzteilnehmer dies explizit von außerhalb des Netzes veranlassen muß. Durch die integrierte Netzarchitektur, beruhend auf der Verknüpfung der Struktur des intelligenten Netzes mit einem Kommunikationsnetz wie dem Mobilfunknetz oder einem Festnetz unter Verwendung der Dienstekennung, kann erreicht werden, daß die Vorteile des intelligenten Netzes bezüglich Flexibilität und Wirtschaftlichkeit bei der Einführung von neuen Diensten in einem bereits bestehenden Kommunikationsnetz ausgenutzt werden.

Ausführungsbeispiele der Erfindung werden anhand von Figuren erläutert. Es zeigen
- Figur 1: die von einem abgehenden Anruf eines Mobilfunkteilnehmers betroffenen Einrichtungen in einem die Struktur eines intelligenten Netzes unterstützenden Mobilfunknetz bei Verwendung einer Dienstekennung zur Erweiterung des Dienstespektrums für den anrufenden Mobilfunkteilnehmer und
- Figur 2: die von einem abgehenden Anruf eines leitungsgebundenen Pestnetzteilnehmers betroffenen Einrichtungen in einem die Struktur eines intelligenten Netzes unterstützenden Festnetz bei Verwendung einer Dienstekennung zur Erweiterung des Dienstespektrums für den anrufenden Festnetzteilnehmer.

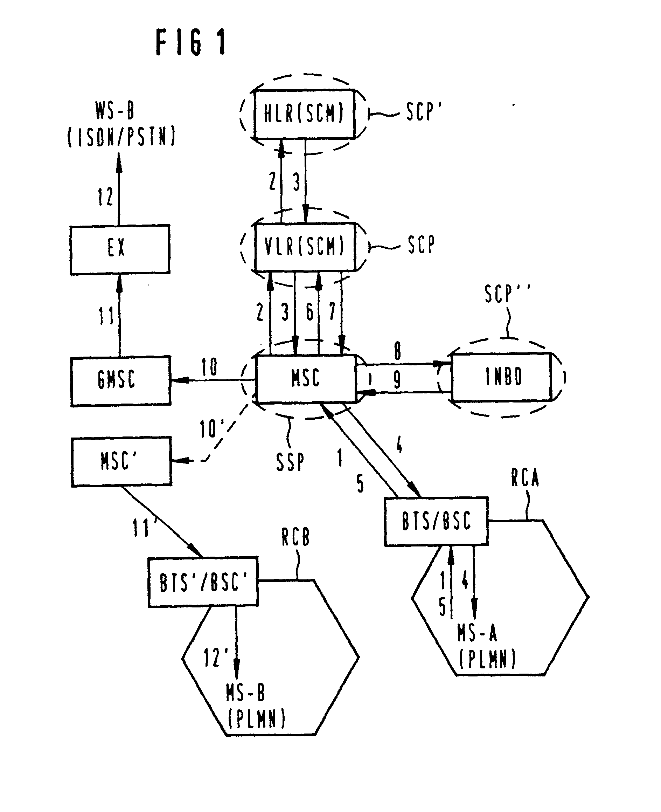

Figur 1 zeigt die vermittlungs- und steuerungstechnischen Abläufe bei der Anrufverarbeitung für einen abgehenden Anruf von einem Mobilfunkteilnehmer MS-A eines Mobilfunknetzes PLMN zu einem Mobilfunkteilnehmer MS-B desselben Mobilfunknetzes PLMN oder zu einem leitungsgebundenen Festnetzteilnehmer WS-B eines digitalen diensteintegrierenden Netzes ISDN oder eines öffentlichen Fernsprechnetzes PSTN. Der anrufende Mobilfunkteilnehmer MS-A befindet sich mit seiner nicht dargestellten mobilen Teilnehmerstation in einer Funkzelle RCA des beispielsweise zellular aufgebauten digitalen Mobilfunknetzes PLMN. Über die Luftschnittstelle entsteht eine physikalische Verbindung von der mobilen Teilnehmerstation zu einer Funkeinrichtung BTS (Base Transceiver Station), die mit einer Kontrolleinrichtung BSC (Base Station Controller) durch eine Leitung verbunden ist. An Stelle des im Beispiel angegebenen Mobilfunknetzes nach dem GSM-Standard kann auch jedes andere Netz verwendet werden, sofern es die Netzstruktur eines intelligenten Netzes aufweist.

Der Mobilfunkteilnehmer MS-A startet den Anruf, indem er einen Sprachkanal zur Signalübertragung von einem Basisstationssystem, bestehend aus einer Vielzahl von Funkeinrichtungen und Kontrolleinrichtungen, anfordert (1). Die Anforderung des Sprachkanals zur Signalübertragung wird vom Basisstationssystem an die für den anrufenden Mobilfunkteilnehmer MS-A aktuell zuständige Mobilvermittlungsstelle MSC (Mobile Switching Center) weitergeleitet, die ihrerseits vom zugehörigen Besucherregister VLR (Visitor Location Register) Authentifikationsdaten abruft, die Informationen über die Berechtigung und über die Zugangsfähigkeit des anrufenden Mobilfunkteilnehmers MS-A im Mobilfunknetz PLMN enthalten (2). Das für den anrufenden Mobilfunkteilnehmer MS-A zuständige Besucherregister VLR fordert die Authentifikationsdaten vom Heimatregister HLR bzw. einem daran angeschlossenen - nicht eigens dargestellten - Authentifikationszentrum an (2, 3).

Von der aktuell zuständigen Mobilvermittlungsstelle MSC werden die Authentifikation des Mobilfunkteilnehmers MS-A nach Erhalt der Daten durchgeführt und Informationen über die Zugangsberechtigung und die Belegung eines zugeteilten Sprachkanals über das Basisstationssystem mit der zuständigen Funkeinrichtung BTS und der zuständigen Kontrolleinrichtung BSC in der Rückrichtung zum Mobilfunkteilnehmer MS-A rückgemeldet (4). Der Mobilfunkteilnehmer MS-A sendet daraufhin über seine zugehörige mobile Teilnehmerstation die Teilnehmerrufnummer des gewünschten Zielteilnehmers wiederum über die für ihn zuständige Funkeinrichtung BTS bzw. die Kontrolleinrichtung BSC an seine Mobilvermittlungsstelle MSC aus (5). Die Mobilvermittlungsstelle MSC fordert vom zuständigen Besucherregister VLR die zur Durchschaltung des Anrufs zum angewählten Zielteilnehmer erforderlichen Informationen ab (6, 7).

Im Heimatregister HLR und im abhängig vom jeweiligen Aufenthaltsort des Mobilfunkteilnehmers zuständigen Besucherregister VLR ist neben den üblichen Teilnehmerdaten mindestens eine Dienstekennung SCM als teilnehmerindividuelles Teilnehmerdatum für den jeweiligen Mobilfunkteilnehmer gespeichert. Die Dienstekennung SCM kennzeichnet dabei eine neue Kategorie von Diensten durch Verknüpfung von im Mobilfunknetz bestehenden Diensten mit Diensten eines intelligenten Netzes, was zu einem erweiterten Dienstespektrum führt. Die für den anrufenden Mobilfunkteilnehmer MS-A eingerichtete Dienstekennung SCM bewirkt, daß während der normalen Anrufbehandlung in dem die Struktur eines intelligenten Netzes unterstützenden Mobilfunknetz PLMN eine Verzweigung zu einer im intelligenten Netz vorhandenen Dienstesteuerungseinheit, die in einer Teilnehmerdatenbasis INDB verwirklicht ist, unabhängig von der gewählten Teilnehmerrufnummer des angerufenen Zielteilnehmers und unmerklich für den anrufenden Mobilfunkteilnehmer ausgeführt wird. Auf diese Weise kann von dem anrufenden Mobilfunkteilnehmer auf zusätzlich im intelligenten Netz nutzbare neue Dienste zugegriffen werden, ohne daß es der Wahl einer dem jeweiligen Dienst zugeteilten Rufnummer bedarf. Bei dem abgehenden Anruf des Mobilfunkteilnehmers MS-A wird daher das zuständige Besucherregister VLR (oder das Heimatregister HLR) auch auf das Vorliegen einer derartigen Dienstekennung SCM für den anrufenden Mobilfunkteilnehmer MS-A abgefragt (6).

Bei Vorhandensein der Dienstekennung SCM für den Mobilfunkteilnehmer MS-A in dem Besucherregister (VLR) wird an die Mobilvermittlungsstelle eine Information rückgemeldet (7), die einen vorübergehenden Ausstieg aus der üblichen Anrufverarbeitung bewirkt und den Zugriff auf die in der Teilnehmerdatenbasis INDB des intelligenten Netzes zur Nutzung der zusätzlichen Diensten eingetragenen dienstespezifischen Daten auslöst (8). Der Ausstieg aus der üblichen Anrufverarbeitung und der Einstieg in die zusätzliche Nutzung eines erweiterten Dienstespektrums durch neue, den Mobilfunkteilnehmern des standardisierten Mobilfunknetzes bisher nicht zur Verfügung stehende Dienste, wird durch die Mobilvermittlungsstelle MSC gesteuert und durchgeführt.

Die Nutzung von weiteren Diensten durch die Mobilfunkteilnehmer des Mobilfunknetzes basiert auf der Netzstruktur eines intelligenten Netzes, umfassend eine Dienstesteuerungseinheit **SCP'** als Heimatregister HLR, eine Dienstesteuerungseinheit **SCP** als Besucherregister VLR, eine Dienstevermittlungseinheit **SSP** als Mobilvermittlungsstelle MSC und eine weitere Dienstesteuerungseinheit **SCP''** als Teilnehmerdatenbasis INDB zur Bereitstellung der für die Mobilfunkteilnehmer neuen Dienste. Es ergibt sich eine integrierte Architektur von Komponenten des intelligenten Netzes mit Komponenten des Mobilfunknetzes, indem die Teilnehmerdatenbasen des Mobilfunknetzes über die Mobilvermittlungsstelle des Mobilfunknetzes mit der anderen Teilnehmerdatenbasis INDB des intelligenten Netzes mittels der Dienstesteuerungseinheiten SCP, SCP', SCP'' und der Dienstevermittlungseinheit SSP gegenseitig verbunden sind.

Ein vom Mobilfunkteilnehmer MS-A zusätzlich zu den Teilnehmerdiensten (Supplementary Services) im Mobilfunknetz nutzbarer Dienst besteht beispielsweise darin, bei dem abgehenden Anruf eine flexible Anrufsperre ("Flexibles Call Barring") in Abhängigkeit von vorgegebenen Zeitpunkten und/oder Zeiträumen oder in Abhängigkeit von bestimmten Zielorten des abgehenden Anrufs, durch Speicherung und Übergabe entsprechender Informationen von der Teilnehmerdatenbasis INDB des intelligenten Netzes an die Mobilvermittlungsstelle MSC im Mobilfunknetz (9) auszuführen. Die Mobilvermittlungsstelle MSC führt dann die Durchschaltung des Anrufs zum Zielteilnehmer abhängig von den obigen Bedingungen durch oder nicht.

Angenommen, daß eine Verbindung vom anrufenden Mobilfunkteilnehmer MS-A zu einem leitungsgebundenen Festnetzteilnehmer WS-B eines diensteintegrierenden Netzes ISDN oder des öffentlichen Fernsprechnetzes PSTN aufgebaut werden soll, werden die für die Herstellung der Verbindung erforderlichen Informationen von der Mobilvermittlungsstelle MSC unter Berücksichtigung der von der Teilnehmerdatenbasis INDB mitgeteilten zusätzlichen dienstespezifischen Informationen an eine gesonderte Mobilvermittlungsstelle GMSC (Gateway Mobile Switching Center) übertragen (10). Die gesonderte Mobilvermittlungsstelle GMSC stellt die Schnittstelle zwischen dem Mobilfunknetz und dem diensteintegrierenden Netz ISDN bzw. dem öffentlichen Fernsprechnetz PSTN dar und leitet die empfangenen Informationen an eine für den leitungsgebundenen Festnetzteilnehmer WS-B zuständige Vermittlungseinrichtung EX weiter (11). Die Vermittlungseinrichtung EX stellt schließlich die Verbindung im Teilnehmeranschlußbereich zum angerufenen Festnetzteilnehmer WS-B im diensteintegrierenden Netz ISDN bzw. im öffentlichen Fernsprechnetz PSTN her (12).

Angenommen, daß die Verbindung zu einem angerufenen Mobilfunkteilnehmer MS-B desselben Mobilfunknetzes PLMN hergestellt werden soll, werden alle Informationen einschließlich der der Mobilvermittlungsstelle MSC mitgeteilten dienstespezifischen Informationen an eine für den angerufenen Mobilfunkteilnehmer MS-B zuständige Mobilvermittlungsstelle MSC' übergeben (10') und anschließend über die zuständige Kontrolleinrichtung BSC' und die zuständige Funkeinrichtung BTS' zum Mobilfunkteilnehmer MS-B weitergeleitet (11', 12'). Der angerufene Mobilfunkteilnehmer MS-B befindet sich beispielsweise in einer Funkzelle RCB des zellularen digitalen Mobilfunknetzes PLMN.

Auch kann ein neuer Dienst, der im intelligenten Netz von der Teilnehmerdatenbasis INDB bereitgestellt wird, für den angerufenen Mobilfunkteilnehmer MS-B anhand einer für ihn im zuständigen Besucherregister VLR bzw. im Heimatregister HLR eingetragenen Dienstekennung SCM genutzt werden. Beispielsweise besteht ein vom angerufenen Mobilfunkteilnehmer MS-B nutzbarer neuer Dienst darin, den ankommenden Anruf über eine flexible Anrufweiterschaltung ("Flexibles Call Forwarding"), zu einem anderen Zielteilnehmer in Abhängigkeit von festgelegten Zeitpunkten und/oder von bestimmten Zeiträumen durchzuführen. Auf diese Weise kann beispielsweise eine Anrufweiterschaltung für den angerufenen Mobilfunkteilnehmer MS-B nur für das Wochenende eingestellt werden, wohingegen an den Wochentagen die übliche Anrufweiterschaltung, die in bekannter Weise den Mobilfunkteilnehmern eines Mobilfunknetzes zur Verfügung steht, Gültigkeit hat. Andere Zeitabhängigkeiten in Bezug auf bestimme Zeiträume eines Tages oder einer Woche oder ähnliche Anwendungen, können ebenfalls durch entsprechende Parameter in der Teilnehmerdatenbasis INDB für den jeweils in Anspruch genommenen Dienst eingeführt werden.

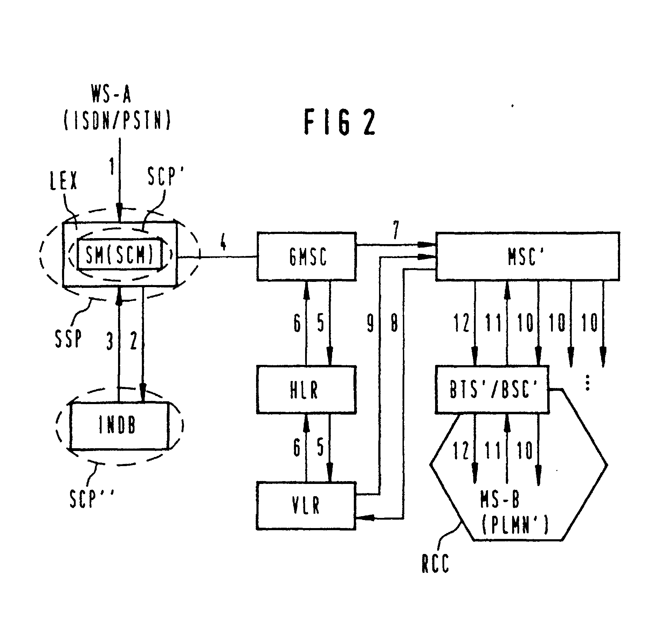

Figur 2 zeigt für einen abgehenden Anruf von einem Festnetzteilnehmer WS-A des diensteintegrierenden Netzes ISDN oder des öffentlichen Fernsprechnetzes PSTN zu einem Mobilfunkteilnehmer MS-B eines Mobilfunknetzes PLMN' die Anrufverarbeitung unter Verwendung der teilnehmerindividuellen Dienstekennung SCM zur Inanspruchnahme von zusätzlich in einem intelligenten Netz nutzbaren Diensten. Vom anrufenden Festnetzteilnehmer WS-A wird eine Teilnehmerrufnummer über seinen leitungsgebundenen oder schnurlosen Telefonapparat eingegeben und zu dem für ihn zuständigen lokalen Vermittlungssystem LEX durch eine Leitung übertragen. Das Vermittlungssystem LEX im Festnetz entspricht der Vermittlungseinrichtung EX in Figur 1 und weist mindestens einen Speicher SM zur Aufnahme der Vermittlungsdaten und der Teilnehmerdaten der angeschlossenen leitungsgebundenen Teilnehmer auf.

zusätzlich zu den üblichen Teilnehmerdaten wird mindestens eine Dienstekennung SCM als teilnehmerindividuelles Teilnehmerdatum in dem Speicher SM für den jeweiligen Festnetzteilnehmer eingerichtet. Bei jedem ankommenden oder abgehenden Anruf wird der Speicher SM auf das Vorliegen der Dienstekennung SCM für den angerufenen oder anrufenden Festnetzteilnehmer während der üblichen Anrufbehandlung überprüft, um bei vorhandener Dienstekennung SCM zu der Teilnehmerdatenbasis INDB des intelligenten Netzes während der Anrufverarbeitung verzweigen zu können. Der Zweck der Abzweigung liegt darin, die zusätzlich im intelligenten Netz verfügbaren Dienste den Festnetzteilnehmern netzintern zur Verfügung stellen zu können, ohne dafür eine für den jeweiligen Dienst reservierte Rufnummer verwenden zu müssen.

Die Verknüpfung von netzspezifischen Daten für Dienste im intelligenten Netz mit netzspezifischen Daten im Festnetz ermöglicht ein erweitertes Dienstespektrum für die Festnetzteilnehmer eines leitungsgebundenen Netzes, falls dieses Netz eine die Netzstruktur des intelligenten Netzes unterstützende Architektur aufweist. Dies ist für ein diensteintegrierendes Festnetz oder das öffentliche Fernsprechnetz gegeben, da das Vermittlungssystem LEX als Dienstevermittlungseinheit SSP, sowie der Speicher SM als Dienstesteuerungseinheit SCP' und die Teilnehmerdatenbasis INDB als weitere Dienstesteuerungseinheit SCP" eines intelligenten Netzes aufgefaßt werden können. Es ist möglich, eine Dienstesteuerung für neue Dienste in der Dienstesteuerungseinheit SCP" durchzuführen und somit die auf Grund der Netzstruktur von intelligenten Netzen gegebenen Vorteile bezüglich Flexibilität bezüglich der Einführung von neuen Diensten in einem integrierten System für die Festnetzteilnehmer zu nutzen.

Die den Ausstieg aus der üblichen Anrufbearbeitung markierende Dienstekennung SCM für den anrufenden Festnetzteilnehmer WS-A bewirkt einen Dialog zwischen der Dienstevermittlungseinheit SSP im Festnetz und der Dienstesteuerungseinheit SCP" im intelligenten Netz, so daß entsprechende dienstespezifische Informationen an die Dienstevermittlungseinheit SSP und damit in das Vermittlungssystem LEX übergeben werden (2, 3). Der vom Festnetzteilnehmer WS-A abgehende Anruf wird vom Vermittlungssystem LEX unter Berücksichtigung der durch die Teilnehmerdatenbasis INDB bereitgestellten Informationen zum angerufenen Zielteilnehmer durchgeschaltet.

Angenommen, es handelt sich beim angerufenen Zielteilnehmer um einen Mobilfunkteilnehmer MS-B, der sich im zellularen digitalen Mobilfunknetz PLMN'beispielsweise in einer Funkzelle RCC aufhält, empfängt die gesonderte Mobilvermittlungsstelle GMSC den Anruf vom Festnetz (4). Von der gesonderten Mobilvermittlungsstelle GMSC, die zur Entgegennahme eines aus einem anderen Netz als dem Mobilfunknetz eintreffenden Anruf angeordnet ist, wird das Heimatregister HLR nach dem Aufenthaltsort des angerufenen Mobilfunkteilnehmers MS-B anhand einer lokalen Teilnehmeridentität (Local Mobile Subscriber Identity, LMSI) abgefragt (5). Das Heimatregister HLR sendet seinerseits eine Anforderung an das Besucherregister VLR, in dessen Zuständigkeitsbereich sich der angerufene Mobilfunkteilnehmer MS-B derzeit befindet (5). Das Besucherregister VLR stellt den aktuellen Aufenthaltsort des Mobilfunkteilnehmers fest und sendet eine der mobilen Teilnehmerstation des angerufenen Mobilfunkteilnehmers MS-B zugeordnete "Roaming"-Nummer (Mobile Station Roaming Number, MSRN) an das Heimatregister HLR und von dort an die gesonderte Mobilvermittlungsstelle GMSC aus (6).

Die gesonderte Mobilvermittlungsstelle GMSC schaltet den ankommenden Anruf zu der Mobilvermittlungsstelle MSC' durch, die für den in seinem Zuständigkeitsbereich befindlichen Mobilfunkteilnehmer MS-B gerade verantwortlich ist (7). Die zuständige Mobilvermittlungsstelle MSC' fordert vom zugehörigen Besucherregister VLR die Teilnehmerdaten des angerufenen Mobilfunkteilnehmers MS-B an (8, 9), um anhand der mitgeteilten Informationen die Verbindung zum angerufenen Mobilfunkteilnehmer MS-B aufbauen zu können. Die richtige mobile Teilnehmerstation des angerufenen Mobilfunkteilnehmers MS-B wird unter Verwendung eines Funkrufkanals zu allen Funkeinrichtungen BTS' mit angeschlossenen Kontrolleinrichtungen BSC' in dem von der Mobilvermittlungsstelle MSC' betreuten Aufenthaltsgebiet angefunkt (paging) (10). Auf diese Weise kann die Funkzellenidentität (Cell Identity, CI) und mit ihr der genaue Aufenthaltsort der mobilen Teilnehmerstation bestimmt werden. Nach erfolgter Rückmeldung von der betroffenen mobilen Teilnehmerstation an die zuständige Funkeinrichtung BTS' und an die Mobilvermittlungsstelle MSC' (11) ist die richtige Funkzelle RCC gefunden. Danach erfolgt von der Mobilvermittlungsstelle MSC' die Authentifikation des angerufenen Mobilfunkteilnehmes MS-B und im Anschluß daran der Aufbau der Verbindung zum Mobilfunkteilnehmer MS-B durch Schaltung eines für die Übertragung des Sprachsignals geeigneten Sprachkanals von der Mobilvermittlungsstelle MSC' über die zuständige Kontrolleinrichtung BSC' und die zuständige Funkeinrichtung BTS' zur mobilen Teilnehmerstation des Mobilfunkteilnehmers MS-B in der Funkzelle RCC (12).

Die für die Netzteilnehmer eines Mobilfunknetzes oder eines Festnetzes mit der Struktur eines intelligenten Netzes eingerichtete Dienstekennung SCM, bestehend aus mehreren Bits, kann beispielsweise BCD-kodiert werden, um eine Mehrzahl von Diensten den jeweiligen Netzteilnehmern zusätzlich zu den ohnehin im Netz vorhandenen Diensten anbieten zu können. Es ist jedoch auch möglich, für jeden im intelligenten Netz zusätzlich nutzbaren neuen Dienst eine eigene Dienstekennung einzurichten, die für alle diese Dienste jeweils in Anspruch nehmenden Netzteilnehmer identisch ist. Das auf den vom Festnetzteilnehmer WS-A abgegebenen Anruf bezogene Beispiel kann ebenso auf einen vom Festnetzteilnehmer entgegengenommenen Anruf angewendet werden. Die neuen Dienste sind dabei nicht auf die oben beschriebenen Beispiele, betreffend Dienste für Mobilfunkteilnehmer, beschränkt.

## Patentansprüche

1. Verfahren zur Nutzung von Diensten durch abgehende Anrufe aussendende und ankommende Anrufe empfangende Netzteilnehmer (MS-A, MS-B, WS-A, WS-B) eines Kommunikationsnetzes, das mindestens eine Vermittlungseinrichtung (MSC, EX, LEX) zur Durchschaltung der abgehenden und ankommenden Anrufe und mindestens eine erste Teilnehmerdatenbasis (HLR, VLR, SM) zur Speicherung der zu den Netzteilnehmern (MS-A,...) gehörigen Teilnehmerdaten sowie mindestens eine jeweils in der Vermittlungseinrichtung (MSC,...) verwirklichte Dienstevermittlungseinheit (SSP) und mindestens eine jeweils in der ersten Teilnehmerdatenbasis (HLR,...) verwirklichte Dienstesteuerungseinheit (SCP', SCP) zur Unterstützung der Netzstruktur eines intelligenten Netzes aufweist,
- wobei mindestens eine Dienstekennung (SCM) zur Unterscheidung zusätzlicher Dienste des intelligenten Netzes von herkömmlichen Diensten des Kommunikationsnetzes als teilnehmerindividuelles Teilnehmerdatum für den jeweils den zusätzlichen Dienst nutzenden Netzteilnehmer (MS-A,...) in der ersten Teilnehmerdatenbasis (HLR,...) eingerichtet wird,
- wobei bei jedem ankommenden oder abgehenden Anruf die erste Teilnehmerdatenbasis (HLR,...) auf das Vorliegen der Dienstekennung (SCM) für den angerufenen oder anrufenden Netzteilnehmer (MS-A,...) während der Anrufbehandlung überprüft wird,
**dadurch gekennzeichnet,**
- **daß** anhand der vorliegenden Dienstekennung (SCM) zu einer in einer Dienstesteuerungseinheit (SCP") verwirklichten zweiten Teilnehmerdatenbasis (INDB) des intelligenten Netzes verzweigt wird, von der Informationen zur Nutzung der im intelligenten Netz zusätzlich angebotenen Dienste an die jeweilige Vermittlungseinrichtung (MSC,...) des Kommunikationsnetzes abgegeben werden.

2. Verfahren nach Anspruch 1,
**dadurch gekennzeichnet,**
**daß** als Kommunikationsnetz ein Mobilfunknetz (PLMN) verwendet wird, in dem die Anrufe von Mobilfunkteilnehmern (MS-A,MS-B) durch mobile Teinehmerstationen ausgesendet oder entgegengenommen werden und in dem die Vermittlungseinrichtung von einer Mobilvermittlungsstelle (MSC) und die erste Teilnehmerdatenbasis von einem Heimatregister (HLR) oder von einem Besucherregister (VLR) gebildet werden.

3. Verfahren nach Anspruch 1,
**dadurch gekennzeichnet,**
**daß** als Kommunikationsnetz ein Festnetz (ISDN, PSTN) verwendet wird, in dem die Anrufe von Festnetzteilnehmern (WS-A, WS-B) durch leitungsgebundene Teilnehmerstationen ausgesendet oder entgegengenommen werden und in dem die Vermittlungseinrichtung von einem lokalen Vermittlungssystem (LEX) und die erste Teilnehmerdatenbasis von einem Datenregister (SM) im Vermittlungssystem (LEX) gebildet werden.

4. Verfahren nach einem der vorhergehenden Ansprüche,
**dadurch gekennzeichnet,**
**daß** ein von einem gerufenen Netzteilnehmer (z.B. MS-B, WS-B) zusätzlich nutzbarer Dienst darin besteht, eine flexible Anrufweiterschaltung zu einem anderen Zielteilnehmer in Abhängigkeit von festgelegten Zeitpunkten und/oder Zeiträumen durchzuführen.

5. Verfahren nach einem der vorhergehenden Ansprüche,
**dadurch gekennzeichnet,**
**daß** ein von einem anrufenden Netzteilnehmer (MS-A, WS-A) zusätzlich nutzbarer Dienst darin besteht, eine flexible Anrufsperre in Abhängigkeit von vorgegebenen Zeitpunkten und/oder Zeiträumen oder in Abhängigkeit von bestimmten Zielorten des ankommenden oder abgehenden Anrufs durchzuführen.

## Claims

1. Method for using services by network subscribers transmitting outgoing calls and receiving incoming call (MS-A, MS-B, WS-A, WS-B) of a communications network that has at least one switching device (MSC, EX, LEX) for connecting through the outgoing and incoming calls and at least a first subscriber database (HLR, VLR, SM) for storing the subscriber data associated with the network subscribers (MS-A, ...), and also at least one services switching unit (SSP) implemented in the respective switching device (MSC, ...) and at least one services control unit (SCP', SCP) implemented in the respective first subscriber database (HLR, ...) for supporting the network structure of an intelligent network,
- wherein at least one services identifier (SCM) is installed in the first subscriber database (HLR, ...) for distinguishing additional services of the intelligent network from conventional services of the communications network as an item of individual subscriber data for the respective network subscriber (MS-A, ...) using the additional service,
- wherein, during every incoming or outgoing call, the first subscriber database (HLR, ...) is checked for the presence of the services identifier (SCM) for the called or calling network subscriber (MS-A, ...) during the call handling,
**characterized**
- **in that**, on the basis of the services identifier (SCM) present, branching takes place to a second subscriber database (INDB), implemented in a services control unit (SCP''), of the intelligent network, which subscriber database delivers items of information for the use of the services additionally offered in the intelligent network to the respective switching device (MSC, ...) of the communications network.

2. Method according to Claim 1,
**characterized**
**in that**, as communications network, a mobile-radio network (PLMN) in used in which the calls of mobile-radio subscribers (MS-A, MS-B) are transmitted or are accepted by mobile subscriber stations and in which the switching device is formed by a mobile switching centre (MSC) and the first subscriber database is formed by a home location register (HLR) or by a visitor location register (VLR).

3. Method according to Claim 1,
**characterized**
**in that**, as communications network, a fixed network (ISDN, PSTN) is used in which the calls of fixed-network subscribers (WS-A, WS-B) are transmitted or are accepted by line-connected subscriber stations and in which the switching device is formed by a local switching system (LEX) and the first subscriber database is formed by a data register (SM) in the switching system (LEX).

4. Method according to one of the preceding claims,
**characterized**
**in that** a service additionally usable by a called network subscriber (for example, MS-B, WS-B) consists in performing a flexible call forwarding to another destination subscriber as a function of specified time instants and/or time intervals.

5. Method according to one of the preceding claims,
**characterized**
**in that** a service additionally usable by a calling network subscriber (MS-A, WS-A) consists in performing a flexible call barring as a function of specified time instants and/or time intervals or as a function of certain destinations of the incoming or outgoing call.

## Revendications

1. Procédé pour l'utilisation de services par des abonnés (MS-A, MS-B, WS-A, WS-B), émettant des appels partant et recevant des appels arrivant, d'un réseau de communication qui comporte au moins un dispositif de commutation (MSC, EX, LEX) pour la connexion des appels partant et arrivant et au moins une première base de données d'abonnés (HLR, VLR, SM) pour la mémorisation des données d'abonnés appartenant aux abonnés (MS-A, ...) ainsi qu'au moins une unité de commutation de services (SSP) réalisée à chaque fois dans le dispositif de commutation (MSC, ...) et au moins une unité de commande de services (SCP', SCP) réalisée à chaque fois dans la première base de données d'abonnés (HLR, ...) pour le soutien de la structure d'un réseau intelligent,
- dans lequel au moins un identificateur de service (SCM) destiné à faire une distinction entre des services supplémentaires du réseau intelligent et des services habituels du réseau de communication est enregistré comme donnée d'abonné, propre à l'abonné, pour l'abonné (MS-A, ...) utilisant à chaque fois le service supplémentaire dans la première base de données d'abonnés (HLR,...),
- dans lequel, à chaque appel arrivant ou partant, la première base de données d'abonnés (HLR, ...) est testée quant à l'éventuelle présence de l'identificateur de service (SCM) pour l'abonné appelé ou appelant (MS-A, ...) pendant le traitement d'appel,
**caractérisé par le fait que**
- à l'aide de l'identificateur de service (SCM) présent, on effectue un branchement vers une deuxième base de données d'abonnés (INDB), réalisée dans une unité de commande de services (SCP"), du réseau intelligent, laquelle deuxième base de données d'abonnés fournit des informations pour l'utilisation des services offerts en plus dans le réseau intelligent au dispositif de commutation (MSC, ...) respectif du réseau de communication.

2. Procédé selon la revendication 1,
**caractérisé par le fait qu'**on utilise comme réseau de communication un réseau de radiocommunication du service mobile (PLMN) dans lequel les appels sont émis ou reçus par des abonnés au service mobile (MS-A, MS-B) via des postes d'abonnés mobiles et dans lequel le dispositif de commutation est formé par un centre de commutation du service mobile (MSC) et la première base de données d'abonnés est formée par un enregistreur de localisation nominal (HLR) ou par un enregistreur de localisation visité (VLR).

3. Procédé selon la revendication 1,
**caractérisé par le fait qu'**on utilise comme réseau de communication un réseau fixe (ISDN, PSTN) dans lequel les appels sont émis ou reçus par des abonnés au service fixe (WS-A, WS-B) via des postes d'abonnés liés aux lignes et dans lequel le dispositif de commutation est formé par un système de commutation local (LEX) et la première base de données d'abonnés est formée par un registre de données (SM) dans le système de commutation (LEX).

4. Procédé selon l'une des revendications précédentes,
**caractérisé par le fait qu'**un service utilisable en plus par un abonné appelé (par exemple MS-B, WS-B) consiste à mettre en oeuvre un renvoi automatique d'appels flexible vers un autre abonné destinataire en fonction d'instants et/ou d'intervalles de temps spécifiés.

5. Procédé selon l'une des revendications précédentes,
**caractérisé par le fait qu'**un service utilisable en plus par un abonné appelant (par exemple MS-A, WS-A) consiste à mettre en oeuvre un blocage d'appels flexible en fonction d'instants et/ou d'intervalles de temps spécifiés ou en fonction de lieux de séjour déterminés de l'appel arrivant ou partant.
